# EUROPÄISCHE PATENTSCHRIFT

(11) **EP 2 067 670 B1**
(45) Veröffentlichungstag und Bekanntmachung des Hinweises auf die Patenterteilung: **06.04.2011**
(21) Anmeldenummer: 08010140.5
(22) Anmeldetag: 04.06.2008
(51) Int. Cl.: B60R 22/20, B60R 22/24

(54) **Höhenversteller für einen Fahrzeugsicherheitsgurt**
Height adjustment for an automobile seatbelt
Réglage en hauteur pour une ceinture de sécurité de véhicule

(30) Priorität: 03.12.2007 DE 102007058398
(43) Veröffentlichungstag der Anmeldung: 10.06.2009
(73) Patentinhaber: Key Plastics Germany GmbH, 57368 Lennestadt (DE)
(72) Erfinder: Lohmann, Horst, 59846 Sundern (DE); Schauerte, Andre, 57368 Lennestadt (DE)
(74) Vertreter: Köchling, Conrad-Joachim

(56) Entgegenhaltungen:
- EP-A- 0 315 989
- EP-A- 0 685 373
- DE-C1- 10 011 902
- GB-A- 2 124 889
- GB-A- 2 127 277

## Beschreibung

Die Erfindung betrifft einen Höhenversteller für einen Fahrzeugsicherheitsgurt, zumindest bestehend aus einer etwa senkrecht im Fahrzeug befestigten oder befestigbaren Schiene mit einem darin verschieblichen Schlitten zur Umleitung des Fahrzeuggurtes, wobei die Schiene eine Profilschiene aus Stahl mit einer fahrzeugseitig befestigten Schienenbasis und von der Basis abragenden Schenkeln ist, zwischen denen der Schlitten von einer oberen Endposition des Schlittens am im Einbauzustand oberen Ende der Schiene bis zu einer unteren Endposition des Schlittens nahe des unteren Endes der Schiene geführt ist.

Ein Höhenversteller nach dem Oberbegriff des Anspruchs 1 ist aus der GB2124889 bekannt.

Derartige Höhenversteller werden in Fahrzeugen beispielsweise an der B- oder C-Säule des Fahrzeugs befestigt und ermöglichen den Fahrzeuginsassen eine Höhenverstellung und somit eine Anpassung des Sicherheitsgurtes an die Körpergröße der Fahrzeuginsassen.

Höhenversteller für einen Fahrzeugsicherheitsgurt ähnlicher Art sind im Stand der Technik vielfach bekannt. So ist beispielsweise aus der EP 1 070 641 A 2 ein Höhenversteller für ein Fahrzeugsicherheitsgurt mit einem Gleitstück bekannt, das in einer Schiene verschiebbar ist, einem Verstellmechanismus mit einem Hebel, durch den eine Bewegung des Gleitstücks an der Schiene freigegeben oder blockiert werden kann, einem an dem Gleitstück befestigten Umlenkbeschlag und einem Aufprallschutzelement bekannt, bei dem das Aufprallschutzelement an dem Gleitstück befestigt ist und sich von dem Gleitstück aus in Richtung von der Schiene weg erstreckt, wobei ein Abdeckteil vorgesehen ist, welches mit dem Aufprallschutzelement in Eingriff ist.

Weitere Höhenversteller für einen Fahrzeugsicherheitsgurt sind beispielsweise aus der EP 0 376 320 A 1 und der deutschen Gebrauchsmusterschrift DE 299 04 925 U 1 bekannt.

Bei dem im Stand der Technik bekannten Höhenverstellern ist es nachteilig, dass bei einem Crashfall ein Aufspreizen der Schiene möglich ist, so dass der darin oder daran geführte Schlitten aus der Schiene gleiten kann und der Schlitten mit dem am Schlitten geführten Fahrzeuggurt somit nicht mehr gehalten ist.

Ausgehend vom eingangs genannten Stand der Technik liegt der Erfindung die Aufgabe zugrunde, einen Gurthöhenversteller der eingangs genannten Art zu schaffen, bei dem ein Lösen des Schlittens von der Schiene oder ein Herausgleiten des Schlittens aus der Schiene verhindert ist, wobei der Höhenversteller gleichzeitig kostengünstig und einfach herstellbar ist.

Zur Lösung dieser Aufgabe schlägt die Erfindung vor, dass die Schenkel im Bereich zwischen der unteren Endposition des Schlittens und dem freien unteren Ende der Schiene formschlüssig miteinander verbunden sind.

Durch eine formschlüssige Verbindung der Schenkel ist ein Herausgleiten des Schlittens aus der Schiene auch im Crashfall weitestgehend verhindert. Durch den Formschluss kann die Schiene oder können Teile der Schiene und/oder der Schlitten mehr oder weniger deformiert werden, aber der Schlitten verbleibt in oder an der Schiene, weil die Schiene nicht aufspreizen kann. Hierdurch ist ein bestimmungsgemäßer Gebrauch des Fahrzeugsicherheitsgurtes auch im schweren Crashfall weiterhin ermöglicht. Eine derartige Schiene ist kostengünstig und einfach herstellbar und erhöht im Crashfall die Sicherheit von Fahrzeuginsassen im Fahrzeug.

Dabei kann besonders bevorzugt vorgesehen sein, dass die Schenkel oder Schenkelenden der Schiene im Bereich des unteren Endes der Schiene zueinander gerichtet sind, und die zueinander gerichteten Enden formschlüssig ineinander greifen.

Weiter kann besonders bevorzugt vorgesehen sein, dass die einen Formschluss bildenden Mittel durch eine schwalbenschwanzartige Ausnehmung am ersten Schenkel und einen schwalbenschwanzartigen Vorsprung am zweiten Schenkel gebildet sind, wobei die Ausnehmung und der Vorsprung ineinander greifen.

Durch die Ausbildung einer
schwalbenschwanzartigen Ausnehmung am ersten Schenkel und eines schwalbenschwanzartigen Vorsprunges am zweiten Schenkel wird insbesondere durch die Hinterschnitte der schwalbenschwanzartigen Form ein Aufspreizen der Schenkel im Crashfall verhindert, so dass der auf der Schiene geführte Schlitten nicht aus der Schiene herausgleiten kann.

Darüber hinaus kann besonders bevorzugt vorgesehen sein, dass die einen Formschluss bildenden Mittel durch eine hammerkopfartige Ausnehmung am ersten Schenkel und einen hammerkopfartigen Vorsprung am zweiten Schenkel gebildet sind, wobei die Ausnehmung und der Vorsprung ineinander greifen.

Auch bei der Ausbildung einer hammerkopfartigen Ausnehmung am ersten Schenkel und eines hammerkopfartigen Vorsprunges am zweiten Schenkel ist im Crashfall das Aufweiten beziehungsweise Aufspreizen der Schenkel weitestgehend verhindert. Auch hierdurch ist die Sicherheit der Fahrzeuginsassen im Fahrzeug im Crashfall erhöht.

Zudem kann besonders bevorzugt vorgesehen sein, dass die Schiene eine U-, C- oder C- Profilform mit abgewinkelt verlängerten Schenkelenden aufweist, wobei die jeweiligen Schenkelenden formschlüssig miteinander verbunden sind.

Hierdurch ist die Verwendung einer nahezu beliebigen profilierten Schiene ermöglicht.

Auch kann besonders bevorzugt vorgesehen sein, dass die Randkante der Formschlusskontur schräg in Richtung der Basis der Profilschiene verläuft.

Durch die schräge Verlaufsrichtung der Randkante der Formschlusskontur in Richtung der Basis der Profilschiene ist ein Aufspreizen von Teilen der Schiene in Richtung der Basis oder in der der Basis entgegen gesetzten Richtung erschwert. Somit wird auch hierdurch der Zusammenhalt der Schenkel beziehungsweise der Schenkelenden im Crashfall erhöht.

Als weiteres Mittel zur Erhöhung der Formstabilität und um ein Verbiegen oder Aufspreizen der formschlüssig miteinander verbundenen Schenkelenden in Richtung der Basis der Profilschiene oder in der der Basis entgegen gesetzten Richtung zu verhindern, kann besonders bevorzugt vorgesehen sein, dass im Bereich nahe der Randkante der Formschlusskontur die Schiene gekerbt ist, so dass durch die Kerbe die Randkanten der Formschlusskontur wulstartig ineinander verformt sind, beziehungsweise die wulstartige Verformung an oder nahe einer an der anderen Randkante ausgebildeten Fase an- oder aufliegt. Die wulstartige Verformung kann auch mit anderen Mitteln anstelle der Kerben erzeugt sein.

Auch hierdurch wird der Halt der formschlüssig aneinander liegenden Schenkel beziehungsweise Schenkelenden, insbesondere im Crashfall erhöht.

Alternativ kann hierzu besonders bevorzugt vorgesehen sein, dass im Bereich nahe der Randkante der Formschlusskontur die Schiene gekerbt ist, sodass durch die Kerbe der der Randkante nahe Bereich aufgestaucht ist und einen geringen Teil des der Randkante benachbarten Schenkels oder Schenkelendes überdeckt und die formschlüssige Verbindung fixiert. Die Aufstauchung kann auch mit anderen Mitteln anstelle der Kerbung erzeugt sein.

Durch die insbesondere durch die Kerbe aufgestauten Bereiche wird ein Aufbiegen oder Verspreizen der Schenkel beziehungsweise Schenkelenden in Richtung der Basis der Schiene oder in der der Basis entgegen gesetzten Richtung der Schiene erschwert und die Sicherheit im Crashfall erhöht.

Weiter alternativ oder ergänzend kann hierzu besonders bevorzugt vorgesehen sein, dass ein Schenkelendbereich der Schiene nahe der Randkante der Formschlusskontur beidseitig gekerbt ist, so dass im Bereich der Randkante eine etwa V-förmige Ausnehmung gebildet ist, wobei der die andere Randkante bildende Bereich des anderen Schenkels etwa spitz ausgebildet ist und in der V-förmigen Ausnehmung angeordnet ist. Das Ineinandergreifen der Randkanten kann auch durch andere Maßnahmen anstelle der Kerbung erreicht sein.

Durch die Ausbildung einer etwa V-förmigen Ausnehmung an der Randkante des einen Schenkels und der entsprechend der Kontur der V-Form gebildeten Spitze an der anderen Randkante ist ein Aufbiegen oder Verspreizen in Richtung der Basis der Schiene oder der Basis entgegen gesetzten Richtung weitestgehend verhindert.

Weiter kann besonders bevorzugt vorgesehen sein, dass im Bereich zwischen der unteren Endposition des Schlittens und dem freien unteren Ende der Schiene eine Lochung, beispielsweise als Entlastungs- oder Deformationslochung angeordnet ist.

Auch kann besonders bevorzugt vorgesehen sein, dass im Bereich zwischen der unteren Endposition des Schlittens und dem freien unteren Ende der Schiene mehrere Lochungen, beispielsweise als Entlastungs- oder Deformationslochungen angeordnet sind.

Eine derartige Lochung stellt einen SollDeformationsbereich an der Schiene zur Verfügung. Das heißt im Crashfall wird sich die Schiene im Bereich dieses Soll-Deformationsbereiches deformieren und Teile der Crash-Energie aufnehmen, aber ein Herausgleiten des Schlittens aus der Schiene oder ein Lösen des Schlittens von der Schiene ist weiterhin verhindert.

Zur einfachen und intuitiven Bedienung des Höhenverstellers und zur schnellen und einfachen Anpassung an die Körpergröße des Fahrzeuginsassens kann besonders bevorzugt vorgesehen sein, dass auf oder an der Schiene und/oder auf oder an dem Schlitten Rastelemente angeordnet sind, so dass der Schlitten rastend auf der Schiene verschieblich ist.

Um ein Hinausschieben des Schlittens über die Endposition hinaus zu verhindern, kann besonders bevorzugt vorgesehen sein, dass auf oder an der Schiene ein Wegbegrenzungsanschlag, der ein Verschieben des Schlittens in Richtung des Erdbodens begrenzt, angeordnet ist.

Ein derartiger Wegbegrenzungsanschlag kann im Crashfall eine erste Verzögerung der Bewegung des Schlittens in Richtung des unteren freien Endes der Schiene bewirken. Hierdurch ist das Auftreffen des Schlittens im Crashfall auf die formschlüssigen Enden bereits abgebremst.

Schließlich kann besonders bevorzugt vorgesehen sein, dass der Wegbegrenzungsanschlag durch die formschlüssig miteinander verbundenen Enden der Schiene gebildet ist.

Die formschlüssig miteinander verbundenen Enden der Schiene verhindern somit nicht nur im Crashfall ein Aufspreizen der Schiene, sondern stellen gleichzeitig den Wegbegrenzungsanschlag der Schiene in der Verstellrichtung in Richtung des Erdbodens dar.

Alternativ oder zusätzlich kann vorgesehen sein, dass die Schenkel im Bereich des Formschlusses miteinander verschweißt sind, oder die Schenkel neben dem Formschlussmittel miteinander verschweißt sind, vorzugsweise durch mindestens einen Schweißpunkt miteinander verbunden sind.

Beispielsweise können die Schenkel im Bereich ihrer Randkante neben der Formschlusskontur und/oder im Bereich der Formschlusskontur durch Schweißpunkte miteinander verbunden sein.

Ein Ausführungsbeispiel der Erfindung ist in den Zeichnungen dargestellt um im Folgenden näher beschrieben. Es zeigt:
- Figur 1: einen erfindungsgemäßen Gurthöhenversteller, bestehend aus Schiene und Schlitten, perspektivisch gesehen;
- Figur 2: eine erfindungsgemäße Schiene in Draufsicht;
- Figur 3: der untere Endbereich einer erfindungsgemäßen Schiene im Querschnitt gesehen;
- Figur 4: desgleichen aus Figur 3 in Draufsicht;
- Figur 5: desgleichen aus Figur 4 mit zusätzlich angeordneten Kerben;
- Figur 6: desgleichen aus Figur 3 mit zusätzlichen Kerben;
- Figur 7: eine Ausschnittsvergrößerung der Schenkelenden und Randkanten mit Kerben und wulstartiger Verformung;
- Figur 8: eine Ausschnittsvergrößerung der Schenkelenden mit Randkanten und Kerben mit V-förmiger Ausnehmung und Spitze.

In den Figuren ist ein Höhenversteller für einen Fahrzeugsicherheitsgurt gezeigt. Der Höhenversteller besteht dabei aus einer etwa vertikal im Fahrzeug befestigten oder befestigbaren Schiene 1 mit einem darin verschieblichen Schlitten 2 zur Umleitung des Fahrzeuggurtes. Die Schiene 1 ist eine Profilschiene aus Stahl mit einer fahrzeugseitig befestigten Schienenbasis 3 und von der Basis 3 abragenden Schenkeln 4,5. Zwischen den von der Basis 3 abragenden Schenkeln 4,5 ist der Schlitten 2 von einer oberen Endposition des Schlittens 2 am im Einbauzustand oberen Ende der Schiene 1 bis zu einer unteren Endposition des Schlittens 2 nahe des unteren Endes der Schiene 1 geführt. Eine derartige Schiene 1 kann beispielsweise innerhalb eines Fahrzeugs an der B- oder C-Säule mittels der an der Schiene 1 in Einbaulage unteren Endbereich angeordneten Hakenvorsprünge verhakt sein, und an dem in Einbaulage oberen Endbereich mit der jeweiligen Säule verschraubt sein.

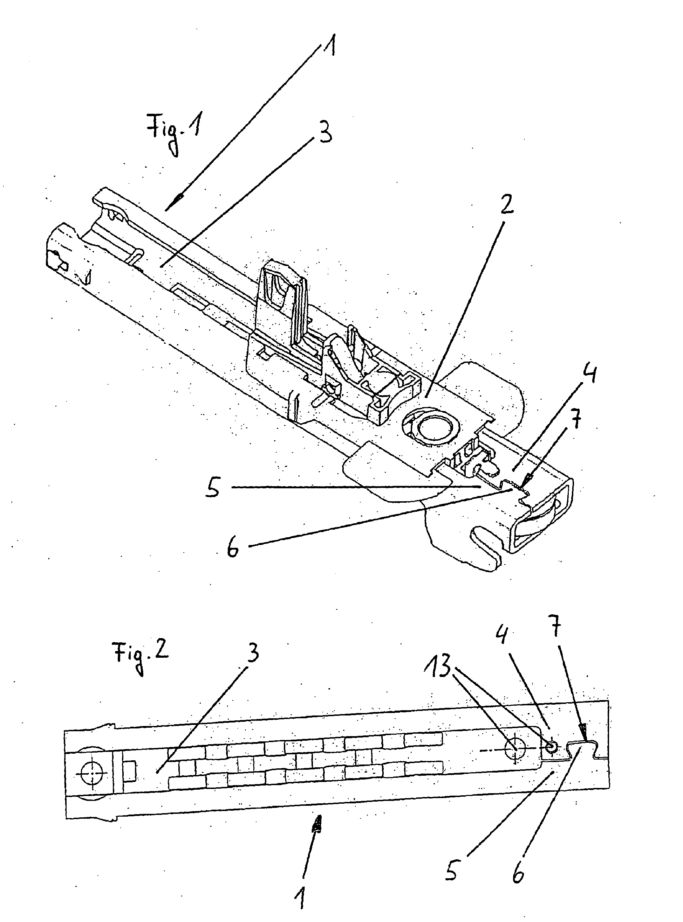

Erfindungsgemäß sind die Schenkel 4,5 im Bereich zwischen der unteren Endposition des Schlittens 2 und dem freien unteren Ende der Schiene 1 formschlüssig miteinander verbunden. Bei einer derartigen Schiene 1 ist das Lösen des Schlittens 2 von der Schiene 1 oder ein Herausgleiten des Schlittens 2 aus der Schiene 1 im Crashfall des Fahrzeugs weitestgehend verhindert, so dass der im Fahrzeug mittels des Fahrzeugsicherheitsgurtes gesicherte Passagier weitestgehend geschützt ist. Ein derartiger Höhenversteller für einen Fahrzeugsicherheitsgurt ist dabei kostengünstig und einfach herstellbar. Je nach Schienentyp können die Schenkel 4,5 oder die Schenkelenden der Schiene 1 im Bereich des unteren Endes der Schiene 1 zueinander gerichtet sein, und die zueinander gerichteten Enden formschlüssig ineinander greifen. Wie insbesondere aus den Figuren 1,2,4 und 5 ersichtlich, sind die einen Formschluss bildenden Mittel durch eine schwalbenschwanzartige Ausnehmung 7 am ersten Schenkel 4 und einen schwalbenschwanzartigen Vorsprung 6 am zweiten Schenkel 5 gebildet. Dabei greift der Vorsprung 6 in die Ausnehmung 7. Hierdurch ist ein Verspreizen beziehungsweise Aufspreizen der Schenkel 4,5 weitestgehend verhindert.

Alternativ und in den Figuren nicht gezeigt, können die einen Formschluss bildenden Mittel durch eine hammerkopfartige Ausnehmung am ersten Schenkel 4 und einem hammerkopfartigen Vorsprung am zweiten Schenkel 5 gebildet sein.

Dabei greift der hammerkopfartige Vorsprung in die hammerkopfartige Ausnehmung und bildet so den Formschluss.

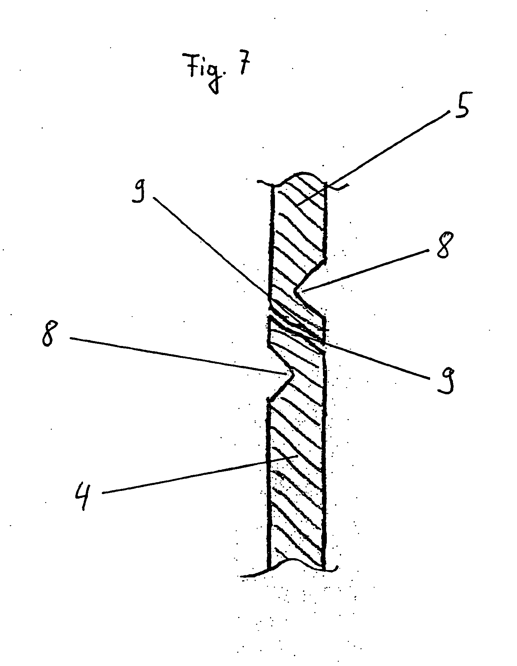

Die Schiene 1 kann dabei eine U-, C- oder C-Profilform mit abgewinkelt verlängerten Schenkelenden aufweisen. Die jeweiligen Schenkelenden sind dabei formschlüssig miteinander verbunden. Zur Erhöhung der Stabilität und um ein Aufspreizen in Richtung der Basis 3 der Profilschiene 1 oder in der Basis 3 entgegen gesetzter Richtung zu verhindern, verläuft die Randkante der Formschlusskontur schräg in Richtung der Basis 3 der Profilschiene 1, wie insbesondere aus Figur 7 ersichtlich.

Wie weiter insbesondere aus Figur 7 ersichtlich, kann im Bereich nahe der Randkante der Formschlusskontur die Schiene 1 bei 8 gekerbt sein, so dass durch die Kerbe 8 die Randkanten der Formschlusskontur wulstartig (bei 9) ineinander verformt sind. Bei der in Figur 7 gezeigten Ausbildung liegt die wulstartige Verformung 9 nahe einer an der anderen Randkante ausgebildeten Fase an. Auch hierdurch ist ein Aufspreizen oder Verformen in Richtung der Basis 3 der Schiene 1 oder in der Basis 3 entgegen gesetzter Richtung weitestgehend verhindert.

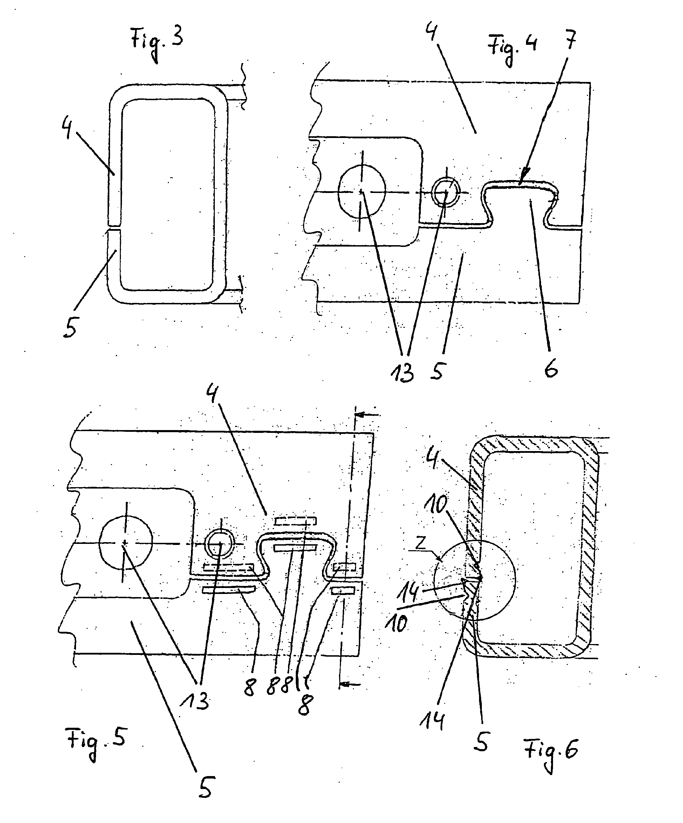

Ergänzend oder alternativ kann hierzu wie insbesondere aus Figur 6 ersichtlich, vorgesehen sein, dass im Bereich nahe der Randkante der Formschlusskontur die Schiene 1 gekerbt (bei 10) ist. Durch die Kerbe 10 ist der der Randkante nahe Bereich aufgestaucht (bei 14) und überdeckt einen geringen Teil des der Randkante benachbarten Schenkels 4,5 und fixiert somit die formschlüssige Verbindung und verhindert zudem ein Aufspreizen in Richtung der Basis 3 oder in der Basis 3 entgegen gesetzter Richtung.

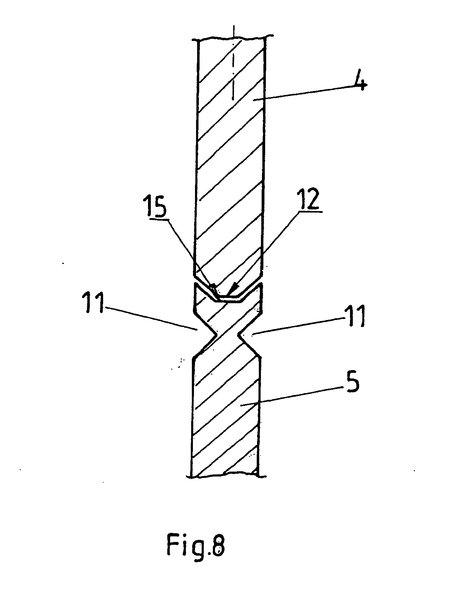

Weiter alternativ kann hierzu wie insbesondere aus Figur 8 ersichtlich, ein Schenkelendbereich (4,5) der Schiene 1 nahe der Randkante der Formschlusskontur beidseitig gekerbt sein (bei 11). Hierdurch ist im Bereich der Randkante eine etwa V-förmige Ausnehmung 15 gebildet. Der die andere Randkante bildende Bereich des anderen Schenkels 4,5 ist etwa spitz (bei 12) ausgebildet und in der etwa V-förmigen Ausnehmung 15 angeordnet.

Wie insbesondere aus den Figuren 2, 4 und 5 ersichtlich, ist im Bereich zwischen der unteren Endposition des Schlittens 2 und dem freien unteren Ende der Schiene 1 eine Lochung 13 als Deformationslochung angeordnet.

Eine derartige Lochung 13 dient als Solldeformationsbereich.

Wie in den Figuren nicht gezeigt, können auch mehrere Lochungen 13 als Entlastungs-, Deformations- oder Befestigungslochungen angeordnet sein.

Zur einfachen Verstellung des Schlittens 2 auf oder an der Schiene 1 sind im Ausführungsbeispiel Rastelemente an dem Schlitten 2 angeordnet, welche in Lochungen an der Schiene 1 eingreifen. Alternativ können Rastelemente an dem Schlitten 2 und/oder an der Schiene 1 angeordnet sein. Hierdurch ist der Schlitten 2 rastend auf der Schiene 1 verschieblich und somit der Fahrzeuggurt optimal an die Größe des Passagiers anpassbar.

Im Ausführungsbeispiel ist ein Wegbegrenzungsanschlag des Schlittens 2 in Richtung des Erdbodens durch die formschlüssig miteinander verbundenen Enden der Schiene 1 gebildet. Alternativ und in den Figuren nicht gezeigt, könnte der Wegbegrenzungsanschlag auch durch andere Mittel im Bereich des nahe des unteren Endes der Schiene gebildet sein.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Höhenversteller für einen Fahrzeugsicherheitsgurt, zumindest bestehend aus einer etwa senkrecht im Fahrzeug befestigten oder befestigbaren Schiene (1) mit einem darin verschieblichen Schlitten (2) zur Umleitung des Fahrzeuggurtes, wobei die Schiene (1) eine Profilschiene aus Stahl mit einer fahrzeugseitig befestigten Schienenbasis (3) und von der Basis abragenden Schenkeln (4,5) ist, zwischen denen der Schlitten (2) von einer oberen Endposition des Schlittens (2) am im Einbauzustand oberen Ende der Schiene (1) bis zu einer unteren Endposition des Schlittens (2) nahe des unteren Endes der Schiene (1) geführt ist, **dadurch gekennzeichnet, dass** die Schenkel (4,5) im Bereich zwischen der unteren Endposition des Schlittens (2) und dem freien unteren Ende der Schiene (1) formschlüssig miteinander verbunden sind.

2. Höhenversteller nach Anspruch 1, **dadurch gekennzeichnet, dass** die Schenkel(4,5) oder Schenkelenden der Schiene (1) im Bereich des unteren Endes der Schiene (1) zueinander gerichtet sind, und die zueinander gerichteten Enden formschlüssig ineinander greifen.

3. Höhenversteller nach Anspruch 1 oder 2, **dadurch gekennzeichnet, dass** die einen Formschluss bildenden Mittel durch eine schwalbenschwanzartige Ausnehmung (6) am ersten Schenkel (4) und einen schwalbenschwanzartigen Vorsprung (7) am zweiten Schenkel (5) gebildet sind, wobei die Ausnehmung (6) und der Vorsprung (7) ineinander greifen.

4. Höhenversteller nach Anspruch 1 oder 2, **dadurch gekennzeichnet, dass** die einen Formschluss bildenden Mittel durch eine hammerkopfartige Ausnehmung am ersten Schenkel (4) und einen hammerkopfartigen Vorsprung am zweiten Schenkel (5) gebildet sind, wobei die Ausnehmung und der Vorsprung ineinander greifen.

5. Höhenversteller nach einem der Ansprüche 1 bis 4, **dadurch gekennzeichnet, dass** die Schiene (1) eine
U-, C- oder C- Profilform mit abgewinkelt verlängerten Schenkelenden aufweist, wobei die jeweiligen Schenkelenden formschlüssig miteinander verbunden sind.

6. Höhenversteller nach einem der Ansprüche 1 bis 5, **dadurch gekennzeichnet, dass** die Randkante der Formschlusskontur schräg in Richtung der Basis (3) der Profilschiene (1) verläuft.

7. Höhenversteller nach einem der Ansprüche 1 bis 6, **dadurch gekennzeichnet, dass** im Bereich nahe der Randkante der Formschlusskontur die Schiene (1) gekerbt (bei 8) ist, so dass durch die Kerbe (8) die Randkanten der Formschlusskontur wulstartig (bei 9) ineinander verformt sind, beziehungsweise die wulstartige Verformung (9) an oder nahe einer an der anderen Randkante ausgebildeten Fase an- oder aufliegt.

8. Höhenversteller nach einem der Ansprüche 1 bis 6, **dadurch gekennzeichnet, dass** im Bereich nahe der Randkante der Formschlusskontur die Schiene (1) gekerbt (bei 10) ist, sodass durch die Kerbe (10) der der Randkante nahe Bereich aufgestaucht ist (bei 14) und einen geringen Teil des der Randkante benachbarten Schenkels (4,5) oder Schenkelendes überdeckt und die Formschlüssige Verbindung fixiert.

9. Höhenversteller nach einem der Ansprüche 1 bis 6, **dadurch gekennzeichnet, dass** ein Schenkelendbereich (4,5) der Schiene (1) nahe der Randkante der Formschlusskontur beidseitig gekerbt (bei 11) ist, so dass im Bereich der Randkante eine etwa V-förmige Ausnehmung (15) gebildet ist, wobei der die andere Randkante bildende Bereich des anderen Schenkels (4,5) etwa spitz (bei 12) ausgebildet ist und in der V-förmigen Ausnehmung (15) angeordnet ist.

10. Höhenversteller nach einem der Ansprüche 1 bis 9, **dadurch gekennzeichnet, dass** im Bereich zwischen der unteren Endposition des Schlittens (2) und dem freien unteren Ende der Schiene (1) eine Lochung (13), beispielsweise als Entlastungs- oder Deformationslochung angeordnet ist.

11. Höhenversteller nach einem der Ansprüche 1 bis 9, **dadurch gekennzeichnet, dass** im Bereich zwischen der unteren Endposition des Schlittens (2) und dem freien unteren Ende der Schiene (1) mehrere Lochungen (13), beispielsweise als Entlastungs- oder Deformationslochungen angeordnet sind.

12. Höhenversteller nach einem der Ansprüche 1 bis 11, **dadurch gekennzeichnet, dass** auf oder an der Schiene (1) und/oder auf oder an dem Schlitten (2) Rastelemente angeordnet sind, so dass der Schlitten (2) rastend auf der Schiene (1) verschieblich ist.

13. Höhenversteller nach einem der Ansprüche 1 bis 12, **dadurch gekennzeichnet, dass** auf oder an der Schiene (1) ein Wegbegrenzungsanschlag, der ein Verschieben des Schlittens (2) in Richtung des Erdbodens begrenzt, angeordnet ist.

14. Höhenversteller nach Anspruch 13, **dadurch gekennzeichnet, dass** der Wegbegrenzungsanschlag durch die formschlüssig miteinander verbundenen Enden der Schiene gebildet ist.

15. Höhenversteller nach einem der Ansprüche 1 bis 14, **dadurch gekennzeichnet, dass** die Schenkel (4,5) im Bereich des Formschlusses miteinander verschweißt sind, oder die Schenkel (4,5) neben dem Formschlussmittel miteinander verschweißt sind, vorzugsweise durch mindestens einen Schweißpunkt miteinander verbunden sind.

## Claims

1. A height adjustment means for a vehicle seat belt, at least comprising a rail (1) fastened or capable of being fastened substantially vertically in the vehicle and with a slide (2) displaceable therein for redirecting the vehicle belt, wherein the rail (1) is a profiled rail of steel with a base (3) fastened to the vehicle and limbs (4, 5) which project from the base and between which the slide (2) is guided from an upper end position of the slide (2) on the upper end of the rail (1) in the fitted state as far as a lower end position of the slide (2) close to the lower end of the rail (1), **characterized in that** the limbs (4, 5) are connected to each other in a positively locking manner in the region between the lower end position of the slide (2) and the free lower end of the rail (1).

2. A height adjustment means according to claim 1, **characterized in that** the limbs (4, 5) or limb ends of the rail (1) are directed towards each other in the region of the lower end of the rail (1), and the ends directed towards each other engage one in the other in a positively locking manner.

3. A height adjustment means according to claim 1 or 2, **characterized in that** the means forming a positively locking connection are formed by a dovetail-like recess (6) in the first limb (4) and a dovetail-like projection (7) on the second limb (5), wherein the recess (6) and the projection (7) engage one in the other.

4. A height adjustment means according to claim 1 or 2, **characterized in that** the means forming a positively locking connection are formed by a hammerhead-like recess in the first limb (4) and a hammerhead-like projection on the second limb (5), wherein the recess and the projection engage one in the other.

5. A height adjustment means according to any one of claims 1 to 4, **characterized in that** the rail (1) has a U, C or C-profile shape with limb ends extending in an angled manner, wherein the respective limb ends are connected to each other in a positively locking manner.

6. A height adjustment means according to any one of claims 1 to 5, **characterized in that** the outer edge of the positively locking contour extends obliquely in the direction of the base (3) of the profiled rail (1).

7. A height adjustment means according to any one of claims 1 to 6, **characterized in that** the rail (1) is notched (at 8) in the region close to the outer edge of the positively locking contour, so that the outer edges of the positively locking contour are deformed one into the other in the manner of a bulge (at 9) by the notch (8), or the bulge-like deformation (9) rests against or close to a bevel formed on the other outer edge respectively.

8. A height adjustment means according to any one of claims 1 to 6, **characterized in that** the rail (1) is notched (at 10) in the region close to the outer edge of the positively locking contour, so that the region close to the outer edge is upset (at 14) by the notch (10) and covers a small part of the limb (4, 5) of limb end adjacent to the outer edge and fixes the positively locking connection.

9. A height adjustment means according to any one of claims 1 to 6, **characterized in that** a limb end region (4, 5) of the rail (1) is notched (at 11) on both sides close to the outer edge of the positively locking contour, so that a substantially V-shaped recess (15) is formed in the region of the outer edge, wherein the region of the other limb (4, 5) forming the other outer edge is made substantially acute (at 12) and is arranged in the V-shaped recess (15).

10. A height adjustment means according to any one of claims 1 to 9, **characterized in that** a perforation (13) is provided for example as a relief or deformation perforation in the region between the lower end position of the slide (2) and the free lower end of the rail (1).

11. A height adjustment means according to any one of claims 1 to 9, **characterized in that** a plurality of perforations (13) are provided for example as relief or deformation perforations in the region between the lower end position of the slide (2) and the free lower end of the rail (1).

12. A height adjustment means according to any one of claims 1 to 11, **characterized in that** catch elements are provided on the rail (1) and/or on the slide (2), so that the slide (2) is displaceable in a locking manner on the rail (1).

13. A height adjustment means according to any one of claims 1 to 12, **characterized in that** a path limitation stop, which limits the displacement of the slide (2) in the direction of the ground, is provided on the rail (1).

14. A height adjustment means according to claim 13, **characterized in that** the path limitation stop is formed by the ends of the rail connected to each other in a positively locking manner.

15. A height adjustment means according to any one of claims 1 to 14, **characterized in that** the limbs (4, 5) are welded to each other in the region of the positively locking connection, or the limbs (4, 5) are welded to each other next to the positively locking means, and are preferably joined to each other by at least one spot weld.

## Revendications

1. Système de réglage en hauteur pour une ceinture de sécurité de véhicule, constitué au moins d'un rail (1) fixé, ou pouvant être fixé à peu près verticalement dans le véhicule, et dans lequel peut glisser une pièce coulissante (2) conçue pour dévier la ceinture équipant le véhicule, sachant que ledit rail (1) est un rail profilé en acier comprenant une semelle (3) fixée côté véhicule, et des ailes (4, 5) qui dépassent de ladite semelle et entre lesquelles la pièce coulissante (2) est guidée depuis une position extrême supérieure de ladite pièce coulissante (2), à l'extrémité du rail (1) située en partie haute à l'état intégré, jusqu'à une position extrême inférieure de ladite pièce coulissante (2), proche de l'extrémité inférieure dudit rail (1), **caractérisé par le fait que** les ailes (4, 5) sont reliées l'une à l'autre, par complémentarité de formes, dans la région comprise entre la position extrême inférieure de la pièce coulissante (2) et l'extrémité inférieure libre du rail (1).

2. Système de réglage en hauteur selon la revendication 1, **caractérisé par le fait que** les ailes (4, 5), ou les extrémités desdites ailes du rail (1), sont dirigées l'une vers l'autre dans la région de l'extrémité inférieure dudit rail (1), et les extrémités dirigées l'une vers l'autre s'interpénètrent par complémentarité de formes.

3. Système de réglage en hauteur selon la revendication 1 ou 2, **caractérisé par le fait que** les moyens, instaurant un assemblage par conformation, sont constitués d'une dépouille (6) en queue d'aronde, pratiquée sur la première aile (4), et d'une protubérance (7) en queue d'aronde qui est façonnée sur la seconde aile (5), ladite dépouille (6) et ladite protubérance (7) s'interpénétrant.

4. Système de réglage en hauteur selon la revendication 1 ou 2, **caractérisé par le fait que** les moyens, instaurant un assemblage par conformation, sont constitués d'une dépouille en tête de marteau, pratiquée sur la première aile (4), et d'une protubérance en tête de marteau qui est façonnée sur la seconde aile (5), ladite dépouille et ladite protubérance s'interpénétrant.

5. Système de réglage en hauteur selon l'une des revendications 1 à 4, **caractérisé par le fait que** le rail (1) possède une forme profilée en U, en C ou en C dont les extrémités des ailes sont prolongées en des coudes, les extrémités respectives desdites ailes étant reliées mutuellement par complémentarité de formes.

6. Système de réglage en hauteur selon l'une des revendications 1 à 5, **caractérisé par le fait que** l'arête marginale du profil de l'assemblage par conformation s'étend à l'oblique en direction de la semelle (3) du rail profilé (1).

7. Système de réglage en hauteur selon l'une des revendications 1 à 6, **caractérisé par le fait que** le rail (1) est entaillé (en 8) dans la région proche de l'arête marginale du profil de l'assemblage par conformation, de sorte que, sous l'effet de l'entaille (8), les arêtes marginales dudit profil de l'assemblage par conformation sont déformées les unes dans les autres à la manière d'un bourrelet (en 9), ou bien la zone déformée (9) du type bourrelet est respectivement en applique, ou en appui, sur un biseau ménagé sur l'autre arête marginale, ou à proximité dudit biseau.

8. Système de réglage en hauteur selon l'une des revendications 1 à 6, **caractérisé par le fait que** le rail (1) est entaillé (en 10) dans la région proche de l'arête marginale du profil de l'assemblage par conformation, de sorte que la région proche de ladite arête marginale est refoulée (en 14), sous l'effet de l'entaille (10) ; recouvre une faible partie de l'aile (4, 5), ou de l'extrémité de l'aile qui est voisine de ladite arête marginale ; et verrouille la liaison instaurée par complémentarité de formes.

9. Système de réglage en hauteur selon l'une des revendications 1 à 6, **caractérisé par le fait qu'**une région extrême d'une aile (4, 5) du rail (1) est entaillée de part et d'autre (en 11), à proximité de l'arête marginale du profil de l'assemblage par conformation, donnant ainsi naissance à une dépouille (15) sensiblement configurée en V dans la région de ladite arête marginale, sachant que la région de l'autre branche (4, 5), qui forme l'autre arête marginale, est de réalisation sensiblement pointue (en 12) et est logée dans ladite dépouille (15) configurée en V.

10. Système de réglage en hauteur selon l'une des revendications 1 à 9, **caractérisé par le fait qu'**une perforation (13), agissant par exemple comme une perforation de soulagement ou de déformation, est disposée dans la région comprise entre la position extrême inférieure de la pièce coulissante (2) et l'extrémité inférieure libre du rail (1).

11. Système de réglage en hauteur selon l'une des revendications 1 à 9, **caractérisé par le fait que** plusieurs perforations (13), agissant par exemple comme des perforations de soulagement ou de déformation, sont disposées dans la région comprise entre la position extrême inférieure de la pièce coulissante (2) et l'extrémité inférieure libre du rail (1).

12. Système de réglage en hauteur selon l'une des revendications 1 à 11, **caractérisé par le fait que** des éléments encliquetables sont agencés en appui ou en applique sur le rail (1), et/ou en appui ou en applique sur la pièce coulissante (2), si bien que ladite pièce coulissante (2) peut glisser sur ledit rail (1) avec effet d'encliquetage.

13. Système de réglage en hauteur selon l'une des revendications 1 à 12, **caractérisé par le fait qu'**une butée de limitation de courses, en appui ou en applique sur le rail (1), limite un glissement de la pièce coulissante (2) en direction du sol.

14. Système de réglage en hauteur selon la revendication 13, **caractérisé par le fait que** la butée de limitation de courses est constituée par les extrémités du rail qui sont reliées mutuellement par complémentarité de formes.

15. Système de réglage en hauteur selon l'une des revendications 1 à 14, **caractérisé par le fait que** les ailes (4, 5) sont solidarisées par soudage dans la région de l'assemblage par conformation, ou bien lesdites ailes (4, 5) sont solidarisées par soudage à côté du moyen instaurant ledit assemblage par conformation en étant, de préférence, reliées mutuellement par au moins un point de soudure.
